# EUROPEAN PATENT APPLICATION

(11) **EP 2 514 964 A1**
(43) Date of publication of application: **24.10.2012**
(21) Application number: 11461512.3
(22) Date of filing: 20.04.2011
(51) Int. Cl.: F03D 3/04

(54) **Wind turbine**

(71) Applicant: Piskorz, Waldemar, 21-509 Koden (PL)
(72) Inventor: Piskorz, Waldemar, 21-509 Koden (PL)
(74) Representative: Belz, Anna

(57) **Abstract**

The subject of the present invention is a vertical axis wind engine, which comprises a housing formed by two discs within which there are swing-mounted arch-bent guide vanes (7) connected to electro-mechanical actuators (13) which, in turn, are connected, via a control system (14), to a wind speed sensor 15).

## Description

The invention relates to a vertical axis wind engine whose rotor is enclosed in guide vanes.

Known for example from the Polish patent specification No. 299286 is a vertical axis wind turbine whose rotor is placed inside a cylindrical housing having vertical panels connected at their tops and bottoms and set askew toward the rotor.

According to the present invention, a rotor in the form of a cylinder, rotatably mounted on a stationary axle, has on its outer surface blades having arch-shaped lateral cross-section, said blades spaced along cylinder plane generatrices. The top and the bottom ends of the rotor are enclosed with disks fixed to the axle. Between the discs there are guide vanes having a form of stiff rectangular, arch-bent sheets which comprise pins placed axially in bearings spatially arranged at the perimeter of the disks. The length of the bent-up edge of a guide vane is greater than the bearing-to-bearing spacing, and the guide vanes, when leaned maximally outward, form a closed housing of the rotor. The curvature of the guide vanes is equal to the curvature of a circle passing through their axes of rotation. Pins protruding above the external surface of at least one disk are coupled with electro-mechanical actuators which in turn are connected, via a control system, to a wind speed sensor installed at the actuator.

Between a circle circumscribed around the outermost edges of the rotor blades and a circle passing through the innermost edges of the guide vanes when maximally leaned toward the center there is a gap that only allows for free rotation of the rotor.

Thanks to the adjustable guide vanes, the engine is protected from damage caused by strong gusts of wind; additionally, such a solution makes it possible to control the rotational speed of the rotor. The guide vanes, which form nozzles tapering toward the inside, increase the force exerted by air stream onto the rotor blades irrespectively of wind direction, and additionally increase the engine's power efficiency.

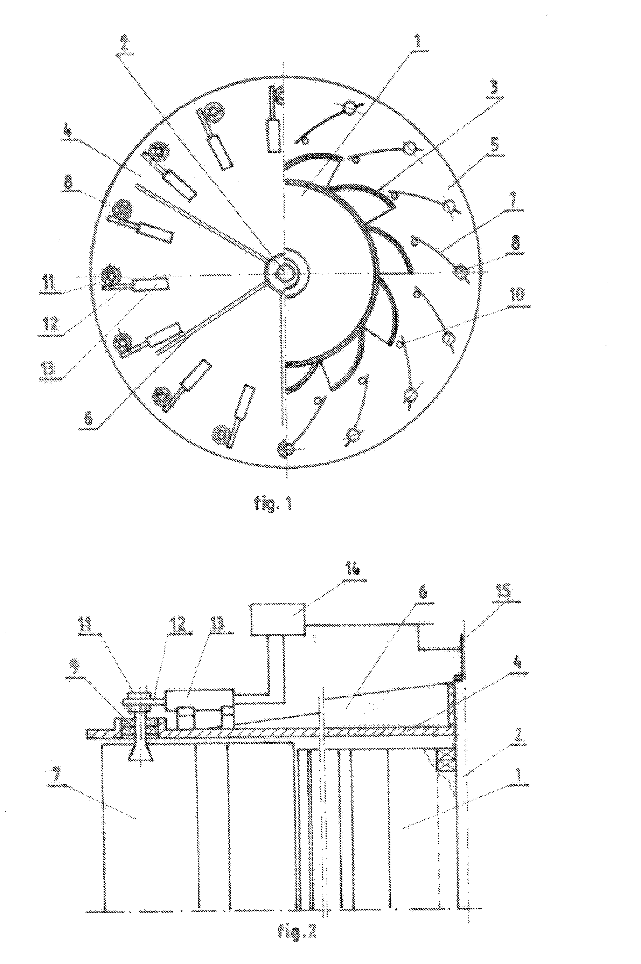

The device according to the present invention is shown in exemplary embodiment in a drawing where Fig. 1 shows a half-crossection and half-view from the face of the top disk, and Fig. 2 shows an enlarged, schematic part of a longitudinal cross-section of the engine, including controlling components.

A turbine rotor 1, bearing-supported on axle 2, has a form of a cylinder with blades 3 on its outer surface, said blades having arch-shaped lateral cross-section and being spaced along the generatrices of the cylindrical surface. The top and the bottom ends of the rotor 1 are encased with discs 4 and 5 which are stiffened by ribs 6 and fixed in a stable manner to the axle 2. Between the discs 4 and 5 there are guide vanes 7 in form of arch-bent panels. The guide vanes comprise, on their horizontal, bent-up sides, axially positioned pins 8, located nearer to one of the vertical edges of the guide vanes 7 and in parallel to them. The pins 8 are placed in bearings 9 embedded in the discs 4 and 5 and circumferentially spaced. The length of the bent-up edge of a guide vane 7 is such that, when arranged tangentially to a circle passing through their axes of rotation, the guide vanes 7 form a closed cylindrical coat, and the curvature of the guide vanes 7 is equal to the curvature of a circle passing through their axes of rotation.

On the internal surface of the top disc 4 there are limiters 10 spaced apart around a circle whose diameter is slightly smaller than the diameter of a circle around which the edges of the guide vanes 7 are located when maximally leaned toward the inside, however, at an acute angle with respect to the radius passing through the external edge of the guide vane 7. However, the diameter of a circle circumscribed around the outermost edges of the blades 3 is not greater than by 1 mm from the diameter of a circle passing through the edges of the guide vanes 7 when they are maximally leaned inward. Onto the tips of pins 8, said tips protruding beyond the surface of the top disk 4, toothed gears 11 are mounted, said gears coupled with the racks of the working arms 12 of linear actuators 13 connected in parallel, via an electric system, to a control system 14. Mounted onto the disc 4 is a wind speed sensor 15 which is connected to the input of the control system 14.

When an excessively strong wind appears, the sensor 15 sends a signal to the control system 14, which then switches on the linear actuators 13 which rotate the pins 8, together with which guide vanes 7 lean outward thus reducing the flow of air to the rotor 1. When the wind eases, the sensor 15 will send a signal to start the linear actuators 13 whose working arms 12 pull back, thus causing the guide vanes 7 to lean back.

## Claims

1. A wind engine having a rotor with blades, said rotor mounted on an axle and surrounded with arch-bent guide vanes situated vertically between stationary disks, **characterized in that** the cylinder of said rotor (1) has means (3) performing the function of blades, and said guide vanes (7) are equipped with pins (8) placed in bearings (9) embedded in said discs, while the tips of said pins (8) protruding beyond the external surface of at least one of the discs (4) and / or (5), are coupled with electro-mechanical actuators (13) whose driving units are connected, via a control system (14), to a wind speed sensor (15).

2. Wind engine according to claim 1, **characterized in that** the length of the bent-up edge of a guide vane (7) is greater than the spacing of said bearings (9), and the curvature of the guide vanes (7) is equal to the curvature of a circle passing through the axes of the bearings (9).

3. Wind engine according to claim 1, **characterized in that** the gap between the circle circumscribed around the outermost edges of the rotor blades (3) and the circle passing through the vertical innermost edges of the guide vanes when maximally leaned inward is such as to only allow for free movement of the rotor (1).
